# EUROPEAN PATENT APPLICATION

(11) **EP 1 468 970 A1**
(43) Date of publication of application: **20.10.2004**
(21) Application number: 04252238.3
(22) Date of filing: 16.04.2004
(51) Int. Cl.: C03B 23/047, C03B 37/012, C03C 23/00

(54) **Method for fabricating a glass rod**

(30) Priority: 16.04.2003 JP 2003111561
(71) Applicant: Shin-Etsu Chemical Co., Ltd., Chiyoda-ku, Tokyo 100-0004 (JP)
(72) Inventor: Yamamura, Waichi, Shin-etsu Chemical Co., Ltd., Chiyoda-ku, Tokyo 100-0004 (JP)
(74) Representative: Senior, Alan Murray

(57) **Abstract**

A method for fabricating a smaller-sized glass rod by elongation of a glass matrix comprises providing a glass matrix, applying steam to surfaces of said glass matrix, and heating the thus applied glass matrix to soften the glass matrix to an extent sufficient for subsequent elongation. The softened glass matrix is elongated to provide a glass rod having a substantially dirt-free, clean surface.

## Description

### BACKGROUND OF THE INVNETION

### Field of the Invention

This invention relates to a method for fabricating a glass rod from a glass preform or matrix for optical fibers to provide a smaller-sized rod.

### Description of the Related Art

For obtaining optical fibers having good optical characteristics and high mechanical strength, it is necessary to make a glass rod for optical fiber whose surface is clean and smooth and has high circularity and draw the glass rod into an optical fiber.

For the fabrication of such a glass rod, the usual practice is to mechanically process a glass matrix into a perfectly round, cylindrical body by means of a cylindrical grinder, soften the body by application of heat and elongate the softened body into a glass rod of high circularity.

In general, it is known that when fragile materials, such as vitreous or glass materials, are subjected to grinding, surface roughness is caused involving microcracks therein. For the grinding of fragile material, a water-soluble grinding fluid is used for various purposes. In this case, a difficulty is involved, after the grinding, in removing the attached grinding fluid, dust, dirt and the like from the ground material.

To avoid this, the glass matrix obtained after grinding is rinsed with pure water or distilled water, thereby removing the attached grinding fluid, and is further subjected to chemical treatment such as with a hydrofluoric acid solution having an HF concentration of 5 to 30 wt%, followed by rinsing with pure water or distilled water and drying. This procedure is described, for example, in Japanese Laid-open Patent Application No. 58-217442.

After the glass matrix has been pretreated as set out hereinabove, the matrix is heated and softened in an electric furnace or by application of a burner flame and elongated into a glass rod for fiber drawing. However, where dirt and the like foreign matters are attached to the surface of the resulting glass rod, it is necessary to subject the rod to fire polishing.

The prior art method set forth above needs to use a chemical such as hydrofluoric acid or the like, and is thus not beneficial from the standpoint of environmental pollution. On the other hand, where dirt is removed from a glass matrix surface without use of chemicals or where a subsequent additional processing step is carried out, or where the matrix surface is brought into contact with some kind of means in the subsequent processing step, it has been experientially inevitable to leave dirt on the surface of the glass matrix even if in minute amounts.

Using a treatment with chemicals so as to completely remove dirt from microcracks in the surface where the dirt is clung thereto, it takes a long time before soaking the surface in the solution of chemicals. The dirt left due to the shortage of treating time or dirt attached in the course of handling cannot be cleaned or wiped up because of the surface roughness caused through grinding or chemical treatment, thus presenting a serious problem.

When a glass matrix having such surface defects is elongated, opaque dirt is observed in the surface of the resulting glass rod. This opaque dirt is one which is colored through crystallization or vitrification of glass in the surface of the rod by the influence of a small amount of foreign matter.

Where there exists dirt in the surface after elongation, fire polishing with a flame may be, in some case, necessary so as to remove the dirt.

It may occur to one that in order to remove dirt prior to elongation, the surface is cleaned with a water-soluble solvent such as isopropyl alcohol or the like. This presents a problem that an additional solvent is required, thus being poor in economy. In addition, it is relatively difficult to completely remove moisture from the cleansed surface, thereby bringing about the problem as set out hereinabove.

### SUMMARY OF THE INVENTION

It is accordingly an object of the invention to provide a method for fabricating a clean glass rod for optical fibers by elongation of a glass matrix.

It is another objet of the invention to provide a method for fabricating a glass rod for optical fiber wherein dirt and/or dust in the surface of a glass matrix can be readily removed in cleaning and drying steps whereby the glass rod has a clean surface.

It is a further object of the invention to provide a method for fabricating a glass rod for optical fiber wherein because of application of high temperature steam, the resulting rod is kept hot in a subsequent drying step and can be fully dried relatively easily by passage of clean air.

The above objects can be achieved, according to the invention, by a method for fabricating a smaller-sized glass rod by elongation of a glass matrix, which comprises providing a glass matrix, applying steam to surfaces of the glass matrix, heating the thus applied glass matrix to soften the glass matrix to an extent sufficient to subsequent elongation, and elongating the softened glass matrix thereby providing a glass rod having a desired diameter.

In the practice of the invention, it is preferred that the steam used is one which has a temperature within a range of 120 to 160°C and a vapor pressure within a range of 0.27 to 0.62 MPa.

### BRIEF DESCRIPTION OF THE DRAWING

Fig. 1 is a schematic view showing a cleaning apparatus of a glass matrix for carrying out a method of the invention;
Fig. 2 is a schematic side view showing a glass matrix, which has been cleaned on the surfaces thereof and then fusion bonded with a dummy rod for elongation at opposite ends of the matrix;
Fig. 3 is a schematic plan view showing a plurality nozzles provided along the inner periphery of a ring-shaped nozzle unit; and
Fig. 4 is a schematic view showing a duplex type of nozzle arrangement including two nozzle units.

### DETAILED DESCRIPTIONOF THE INVENTION

According to the method of the invention, a glass matrix is initially provided. The term "glass matrix" used herein is intended to mean cylindrical glass bodies having different diameters ranging, for example, from 40 to 250 mm and include not only so-called performs or rods, but also ingots used for optical fiber service. The glass matrix used for this purpose is generally one which is made of silica or quartz glass.

The glass matrix, which is subjected to a next cleaning step, is obtained by using a cylindrical grinder for grinding a starting glass body made of silica to obtain a cylindrical glass matrix having an outer diameter as defined hereinabove. For the grinding, free or fixed grains or abrasive particles are used to grind the outer surface of the starting glass body. If necessary, the ground cylindrical glass matrix may be further cleaned with an aqueous solution of chemicals such as an alkali or acid. Such chemicals are known in the art and include, for example, an alkali such as NaOH and an acid such as hydrochloric acid, sulfuric acid, nitric acid, hydrofluoric acid or the like. As mentioned above, these chemicals are usually used in the form of an aqueous solution having a concentration of from 2 to 20 wt% for the alkali and from 5 to 30 wt% for the acid. Especially, NaOH used for this purpose is commercially available as a foamable condensed detergent containing NaOH therein. As a matter of course, other types of alkaline detergents ordinarily used for this and having similar detergency may also be used.

In this way, the cylindrical glass matrix or preform is provided in the method of the invention.

Next, the glass matrix is applied with steam on the surface thereof in a manner as will be hereinafter described with reference to the accompanying drawings. Steam used for this purpose should preferably have a temperature of 120 to 160°C and a vapor pressure of 0.27 to 0.62 MPa. A lower temperature is not favorable in view of the fact that removability or detergency of dirt or like is not satisfactory. A higher temperature may be usable but is poor in economy. Likewise, a lower vapor pressure is not convenient for the reason that satisfactory cleaning effects could not be expected. On the other hand, a higher vapor pressure may be used, but no further cleaning effect will not be attained.

In general, application of moisture to glass bodies is not favorable since it has high affinity for glass and is very liable to be adsorbed thereon. If moisture is left adsorbed on the smaller-sized rod obtained from the glass matrix, it adversely influences a final optical fiber to provide opaque defects in the optical fiber. The likelihood of adsorption on a glass matrix can be conveniently avoided when using steam in the method of the invention as will be described hereinafter.

It should be noted that this steam treatment is most important in the method of the invention and is described in more detail with reference to the accompanying drawings.

After the application of steam, the glass matrix is dried by exposure to a flow of clean air. The clean air is preferably passed to the glass matrix through an air filter until the glass matrix is fully dried. Since the glass matrix is applied with steam or hot water vapor for cleaning, the matrix is heated to a temperature level of steam used and can be readily dried to a full extent when exposed to the flow of clean air. This is one of prominent features of the invention wherein steam is used. Needless to say, the temperature of the heated matrix may vary depending on the steam temperature and the steam application time.

If necessary, the dried matrix may be covered with a protective sack made of a polyolefin resin or the like resin so as to protect the surface from foreign matters.

Thereafter, the glass matrix is tapered at opposite ends thereof by a usual manner by use of a grinder. The tapered portions are rinsed with distilled or pure water to remove dirt which may be attached thereto during the course of the tapering, followed by drying of the tapered portion.

Subsequently, the glass matrix is heated until it is softened, and elongated by a usual manner while moving the glass matrix. The heating is carried out in any known device such as an electric furnace, wherein the glass matrix made of silica is heated, for example, to a temperature of 1,600 to 2,200°C. While moving the glass matrix, for example, at a rate of 2,000 to 2,800 mm/minute, it is elongated into a smaller-sized rod suitable for optical fiber drawing. The difference between the moving speed and the elongation speed ensures the formation of a glass rod of an intended size. This is well known in the art and is not further discussed herein.

In practice, the glass matrix prior to the heating is fixedly attached with a dummy rod at opposite ends thereof as usual, although not essential.

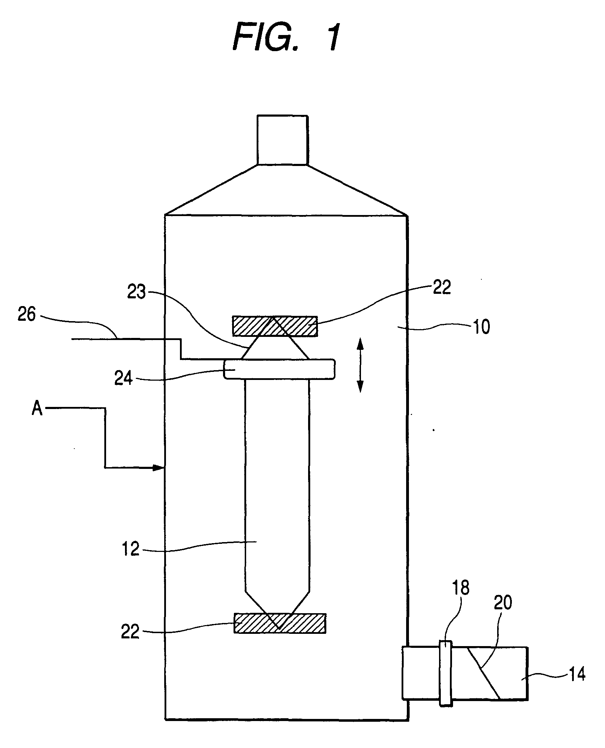

Reference is now made to the accompanying drawings and particularly Figs. 1 to 4. In Fig. 1, a cleaning apparatus A is shown and includes a steam chamber 10 accommodating a glass matrix 12 therein. The chamber 10 has, at a lower side thereof, an air inlet 14 through which air is fed into the chamber 10, and an exhaust port 16, from which air is exhausted. For feeding clean air, the inlet 14 has a filter 18 and an air feed is controlled by means of a control valve 20.

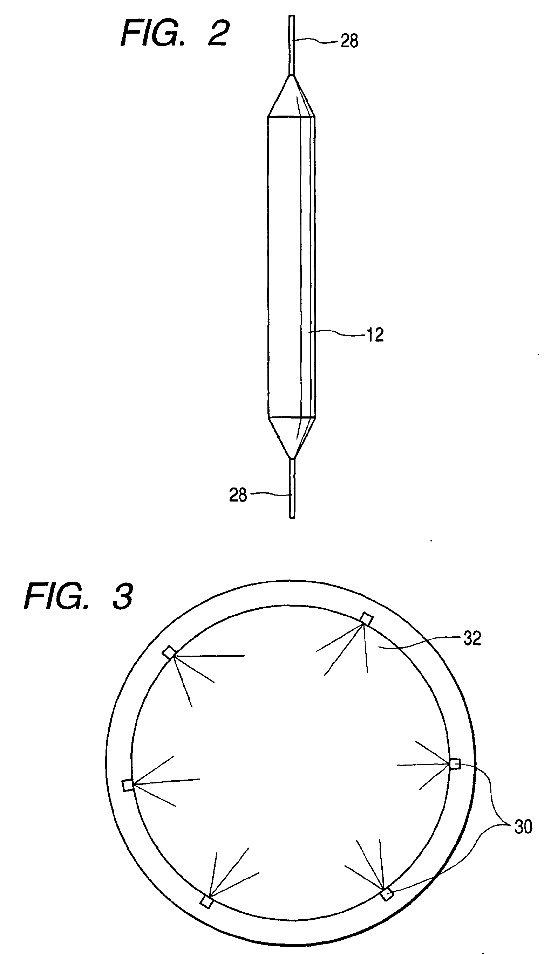

The glass matrix 12 tapered, as 23, at opposite ends is supported at ends thereof with a support 22 which is in turn supported with any suitable means (not shown). Next, the glass matrix 12 obtained immediately after the drying may be placed in a sack made of a plastic resins such as, for example, a polyolefin resin and sealed. Immediately before elongation, the sealed sack is opened only at opposite ends thereof to allow the glass matrix 12 be tapered at the opposite ends by use of a grinder and is fused for attachment with a dummy rod 28 as is particularly shown in Fig. 2.

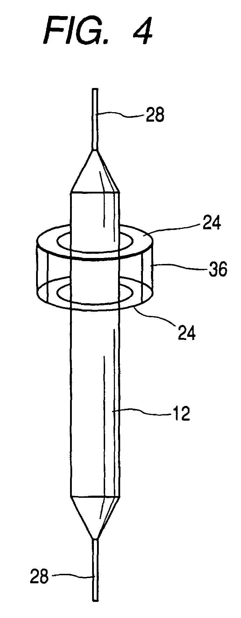

A ring-shaped nozzle unit 24 has a plurality of nozzles 30 as shown in Fig. 3, from which steam is jetted, as 32, against the glass matrix 12. The plurality of nozzles 30 are in face-to-face relation with the glass matrix 12. The nozzle unit 24 is provided as surrounding the glass matrix 12 as shown, and is so arranged as to be vertically moved along the glass matrix 12. In Fig. 1, only one ring-shaped nozzle is shown. Two nozzle units 24, each having a plurality of nozzles in face-to face-relation with the glass matrix 12, from which steam is jetted against the matrix 12, may be provided around the glass matrix 12 to constitute a duplex nozzle arrangement 36 shown in Fig. 4. The space between the glass matrix 12 and the nozzles 24 is preferably set within a range of 100 to 150 mm and may depend on the steam temperature and pressure. The steam is supplied from a line 26 connected to a steam generator (not shown). In Fig. 1, the nozzle unit 24 is shown as being vertically movable along the length of the glass matrix 12 as indicated by broad double arrows. In this connection, the glass matrix may be rotated or may be stood fixed during the course of cleaning with steam. Alternatively, the steam nozzle unit may be fixed, under which the glass matrix 12 is vertically moved. Still alternatively, the glass matrix 12 may be placed horizontally, not vertically as shown in the figure, with which similar results are obtained.

Usually, one to ten reciprocating cycles of the nozzle unit 24 relative to the glass matrix 12 are carried out for complete removal of foreign matters. The cycles of the reciprocation may depend on the degree of surface contamination with dirt or dust.

In the cleaning apparatus A, air passed through the valve 18 and the filter 20 is fed upwardly through the chamber 10 and discharged from the exhaust port 16 thereby drying the glass matrix 10 after the application of steam. For this purpose, clean air passage is continued over several minutes because the matrix is heated by means of steam, although depending, more or less, on the flow rate of the air. Since the glass matrix is applied with the steam, it becomes hot and can be readily dried, under which moisture is not substantially left on or in the surfaces of the matrix.

Next, the glass matrix 12 obtained immediately after the drying may be placed in a sack made of a plastic resins such as, for example, a polyolefin resin and sealed.

Finally, the resultant glass matrix, with or without attachment of a dummy rod as set out hereinbefore, is transferred to an elongation apparatus equipped with an electric furnace, followed by heating and elongating in a manner as well known in the art to provide a smaller-sized rod for optical fibers. Since the glass matrix is cleaned with steam in accordance with the invention, the rod obtained has no problem on surface contamination with dirt or dust and has a clean surface.

The invention is more particularly described by way of example, which should not be construed as limiting the invention thereto. Comparative Example is also shown.

### Example

Using a cylinder grinder, a fused silica glass matrix was ground into a cylindrical body having an outer diameter of 130 mm? by means of a grindstone using fixed grains with a size of #200 thereby providing a cylindrical glass matrix 12.

Next, the glass matrix 12 was set in a cleaning apparatus A of the type shown in Fig. 1. This cleaning apparatus A had eight nozzles 26 directed against the glass matrix with a space therebetween being set at 100 mm. The steam nozzle unit 26 was reciprocated 10 times at a moving rate of 2500 mm/minute, from which steam at 0.4 MPa was jetted against the glass matrix 12 to clean the surface thereof. The amount of the steam used was at 42 kg/hour.

Thereafter, clean air was supplied from an air inlet 14 into the cleaning apparatus A for 2 minutes. The clean air feed was controlled by controlling a valve 20 and the air was passed into the apparatus A via a filter 18 and discharged from an exhaust port 16 after drying the surface of the glass matrix 12.

The temperature of the glass matrix 12 immediately after the drying was about 50°C. Subsequently, the matrix 12 was placed and sealed in a polyethylene sack so as to protect the surface thereof.

The polyethylene sack was cut off at opposite sides thereof to expose the glass matrix 12 to an extent of about 200 mm at opposite ends thereof, followed by grinding by use of a grinder for tapering. The tapered portions were rinsed with distilled water and dried. After the drying, a dummy rod 28 made of the same material as the glass matrix 12 was fusion bonded to the opposite ends of the glass matrix 12 as shown in Fig. 2.

The glass matrix attached with the dummy rod was set in an elongation apparatus equipped with an electric furnace. A heater of the electric furnace was set at 2000°C and the glass matrix was elongated while continuously moving the matrix to provide a glass rod having an outer diameter of 50 mm?.

After cooling the glass matrix, the surface was observed. As a result no problem on surface contamination was recognized.

### Comparative Example

Using a cylindrical grinder, a starting fused silica glass matrix was ground into an outer diameter of 130 mm? by means of a grindstone using fixed grains to provide a cylindrical glass matrix. Next, the glass matrix was rinsed with distilled water on the surface thereof, and dried naturally.

The glass matrix had its surface which had a slight degree of dry streak. Thereafter, the glass matrix was placed and sealed in a polyethylene sack so as to protect the surface thereof.

The sack was opened at opposite ends thereof to expose the glass matrix at opposite end portions thereof by about 200 mm from each end, followed by tapering by use of a grinder. After the tapering, the dirt at the tapered portions was rinsed with distilled water and naturally dried. After the drying, a dummy rod made of the same material as the glass matrix was fusion bonded at the opposite ends thereof.

The glass matrix having the dummy rod at the opposite ends was set in an elongation apparatus equipped with an electric furnace, not shown, and a heater of the electric furnace was set at 2000°C. Under these conditions, the glass matrix was elongated while continuously moving, thereby obtaining a glass rod having an outer diameter of 50 mm? .

After cooling, the surface of the glass rod was visually observed, revealing that small opaque spots were observed in the surface.

As will be apparent from the foregoing, the cleaning method of the invention exhibits good working properties and are eco-friendly because of no chemicals or solvent being used. Nevertheless, dirt, dust and the like foreign matters can be readily removed and thus, a satisfactory cleaning effect can be expected without adverse influences of moisture irrespective of the use of steam. After the cleaning, the resultant matrix is elongated to obtain a glass rod having a clean surface.

## Claims

1. A method for fabricating a smaller-sized glass rod by elongation of a glass matrix, which comprises providing a glass matrix, applying steam to surfaces of said glass matrix, heating the thus applied glass matrix to soften the glass matrix to an extent sufficient for subsequent elongation, and elongating the softened glass matrix thereby providing a glass rod having a desired diameter.

2. The method according to claim 1, wherein said steam has a temperature ranging from 120 to 160°C.

3. The method according to claim 1 or 2, wherein said steam has a vapor pressure ranging from 0.27 to 0.63 MPa.

4. The method according to claim 1, 2 or 3, wherein said glass matrix is one that is cylindrically ground with free or fixed grains on the surface thereof prior to the application of steam.

5. The method according to claim 4, wherein after the grinding, said matrix is cleaned with an aqueous solution of an alkali or acid.

6. The method according to any preceding claim, wherein the steam is applied by jetting against said glass matrix from at least one nozzle unit provided around said glass matrix.

7. The method according to claim 6, wherein said nozzle unit is in a form of a ring having a plurality nozzles along an inner periphery thereof in face-to-face relation with said glass matrix.

8. The method according to claim 6 or 7, wherein the application is carried out by moving said at least one nozzle unit while fixing said glass matrix.

9. The method according to claim 6 or 7, wherein the application is carried out by moving said glass matrix while fixedly holding said at least one nozzle unit.

10. The method according to any preceding claim, wherein said glass matrix is made of a glass preform.

11. The method according to any one of claims 1 to 9, wherein said matrix is made of a glass ingot.

12. A glass rod fabricated according to the method defined in any preceding claim.
